# FASCICULE DE BREVET EUROPEEN

(11) **EP 2 943 702 B1**
(45) Date de publication et mention de la délivrance du brevet: **16.11.2016**
(21) Numéro de dépôt: 13802923.6
(22) Date de dépôt: 03.12.2013
(51) Int. Cl.: F16H 57/04

(54) **AGENCEMENT POUR LA LUBRIFICATION DE DEUX TRAINS D'ENGRENAGES VOISINS ETAGES VERTICALEMENT**
ANORDNUNG ZUM SCHMIEREN ZWEIER NEBENEINANDER LIEGENDER VERTIKAL GESTUFTER RÄDERWERKE
ARRANGEMENT FOR LUBRICATING TWO VERTICALLY-STAGED ADJACENT GEARTRAINS

(30) Priorité: 14.01.2013 FR 1350294
(43) Date de publication de la demande: 18.11.2015
(73) Titulaire: Renault S.A.S., 92100 Boulogne-Billancourt (FR)
(72) Inventeur: SCHAFF, Sébastien, F-94450 Limeil Brevannes (FR); LELEU, Mathieu, F-75012 Paris (FR)
(86) Numéro de dépôt international: PCT/EP2013/075327
(87) Numéro de publication internationale: WO 2014/108250

(56) Documents cités:
- DE-A1- 19 538 192
- DE-A1-102009 052 595
- US-A1- 2005 230 215

## Description

L'invention concerne un agencement pour la lubrification de deux trains d'engrenages voisins étagés verticalement.

L'invention concerne plus particulièrement un agencement pour la lubrification de deux trains d'engrenage voisins d'axes horizontaux montés à rotation dans un carter étanche dont le fond constitue un premier réservoir dit principal contenant un lubrifiant, un premier train d'engrenage étant agencé sensiblement au-dessus d'un second train d'engrenage et des moyens de récupération du lubrifiant étant aptes à diriger le lubrifiant en direction d'un second réservoir additionnel supérieur de stockage temporaire dont le lubrifiant est évacué progressivement vers le premier train d'engrenage.

On connaît de nombreux exemples d'agencement pour la lubrification de trains d'engrenages.

Le document FR-A1-2.751.726 décrit et représente un agencement pour la lubrification d'un train d'engrenages comportant pour l'essentiel un moyen de récupération de lubrifiant constitué d'une surface de guidage qui est susceptible de récupérer le lubrifiant éjecté par centrifugation à partir d'un train d'engrenages, et un réservoir additionnel de stockage temporaire alimenté par cette surface dans lequel le lubrifiant est stocké et à partir duquel il est susceptible d'être redirigé vers ledit train d'engrenages.

Cette configuration donne toute satisfaction quand il s'agit de ne lubrifier qu'un train d'engrenages mais pose néanmoins un problème lorsqu'il s'agit de lubrifier plusieurs trains d'engrenages.

En particulier, dans le cas de trains d'engrenages voisins et sensiblement superposés, il est souhaitable de pouvoir bénéficier de moyens de lubrification adaptés à la multiplicité des arbres.

Une solution consiste à multiplier le nombre de dispositifs précédemment décrits de manière à utiliser autant de réservoirs additionnels de stockage temporaire qu'il existe de trains d'engrenages à lubrifier.

Cette conception présente néanmoins l'inconvénient de multiplier le nombre de réservoirs additionnels de stockage temporaire, et donc, d'augmenter inutilement l'encombrement global de l'ensemble devant être lubrifié.

Par ailleurs, cette conception ne peut être appliquée à des trains d'engrenages tournant à des vitesses de rotation différentes, dans la mesure où pour certaines vitesses la centrifugation du lubrifiant est insuffisante ou excessive, de sorte qu'il est impossible d'en assurer la récupération.

L'invention propose donc un agencement de lubrification permettant à partir d'un dispositif unique la lubrification de deux trains d'engrenages voisins et superposés susceptibles de tourner à des vitesses de rotation différentes.

Dans ce but, l'invention propose un agencement du type décrit précédemment, caractérisé en ce qu'il comporte un premier déflecteur d'alimentation du premier train d'engrenages qui est alimenté par le second réservoir additionnel supérieur de stockage temporaire, qui est apte à assurer la lubrification du premier train d'engrenages, et qui est apte à se remplir de lubrifiant jusqu'à un niveau selon lequel il déborde vers un second déflecteur d'alimentation du second train d'engrenages apte à assurer la lubrification du second train d'engrenages, pour assurer une lubrification différenciée des trains d'engrenages, et en ce que chaque déflecteur comporte un boîtier cylindrique fixe ouvert, qui est apte à être fermé par une face transversale du carter, qui est agencé coaxialement à l'extrémité du train d'engrenages associé, et qui comporte un flasque en forme de disque solidaire d'une paroi périphérique, la paroi périphérique comportant au moins un orifice périphérique supérieur qui est agencé au-dessus de l'axe du train associé et qui permet l'entrée de lubrifiant, et un flasque comportant une orifice central coaxial de sortie de lubrifiant communiquant avec un canal axial interne de lubrification du train d'engrenage associé.

Selon d'autres caractéristiques de l'invention :
- la paroi périphérique du premier déflecteur cylindrique comporte de surcroît un orifice périphérique inférieur de transfert de lubrifiant vers le second déflecteur, et une cloison interne, qui s'étend entre le flasque et la face transversale du carter sensiblement à l'opposé de l'orifice périphérique supérieur par rapport à l'axe du déflecteur, qui comporte une extrémité joignant de manière étanche la paroi périphérique entre les orifices périphériques supérieur et inférieur, et une extrémité libre agencée au-dessus de l'orifice central coaxial, est agencée dans le boîtier pour le diviser sensiblement en une chambre d'alimentation du premier train d'engrenages et un canal d'alimentation du second déflecteur ;
- la cloison comporte une partie principale qui comporte l'extrémité libre, et une partie de jonction qui prolonge la partie principale jusqu'à la paroi périphérique entre les orifices périphériques supérieur et inférieur ;
- l'orifice périphérique inférieur de transfert communique par l'intermédiaire d'un conduit avec l'orifice périphérique supérieur d'entrée de lubrifiant du second déflecteur ;
- l'orifice périphérique supérieur d'entrée de lubrifiant est alimenté lubrifiant à partir du second réservoir additionnel supérieur de stockage temporaire par l'intermédiaire d'une goulotte ;
- les moyens de récupération d'huile alimentent le second réservoir additionnel supérieur de stockage temporaire selon un débit proportionnel à la vitesse de rotation des premier et/ou second trains d'engrenages ;
- le débit de lubrifiant fourni par les moyens de récupération est prévu pour être supérieur au débit absorbé par l'orifice central du premier déflecteur dès lors que l'un et/ou l'autre des trains d'engrenages dépasse une vitesse de rotation déterminée, pour associer le débordement de la chambre d'alimentation du premier train d'engrenages vers le canal d'alimentation du second déflecteur à une vitesse de rotation déterminée d'au moins un train d'engrenages.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective d'une partie d'une transmission de véhicule automobile à deux trains d'engrenages voisins et superposés lubrifiés par un agencement selon l'invention ;
- la figure 2 est une vue en bout de l'agencement de la figure 1 représentée dans une position d'alimentation en lubrifiant du seul premier train d'engrenages ;
- la figure 3 est une vue en bout de l'agencement de la figure 1 représentée dans une position d'alimentation en lubrifiant des deux trains d'engrenages.

Dans la description qui va suivre, des chiffres de références identiques désignent des pièces identiques ou ayant des fonctions similaires.

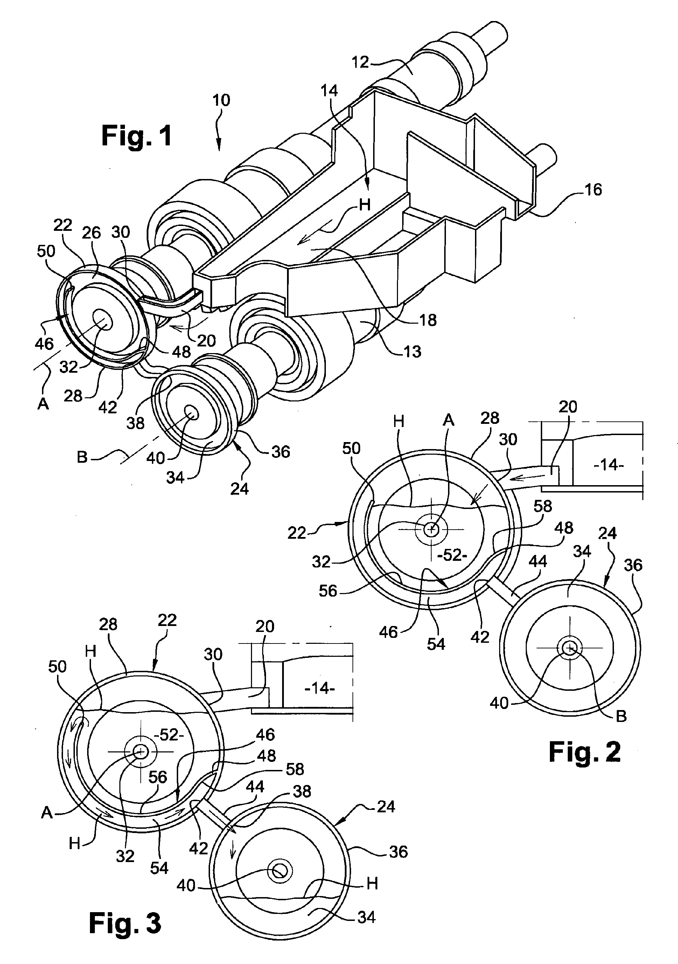

On a représenté à la figure 1 une partie 10 d'une boîte de vitesses du véhicule automobile.

De manière connue, la partie 10 comporte un premier train d'engrenages 12 d'axe "A" horizontal et un second train d'engrenages 13 (non représenté) d'axe "B" qui est lui aussi horizontal.

Le premier train d'engrenages 12 et le second train d'engrenages 13 sont par exemple tous les deux montés à rotation dans un carter étanche (non représenté) dont le fond constitue un premier réservoir principal contenant un lubrifiant "H".

Le premier train d'engrenages 12 est agencé sensiblement au-dessus du second train 13 d'engrenages et des moyens (non représentés) de récupération du lubrifiant "H" sont aptes à diriger le lubrifiant en direction d'un second réservoir 14 dit réservoir additionnel supérieur de stockage temporaire, dont le lubrifiant est évacué progressivement vers le premier train d'engrenages 12.

Comme l'illustre la figure 1, le second réservoir additionnel supérieur 14 est par exemple conformé sous la forme d'un bac qui comporte une entrée 16 permettant l'approvisionnement en lubrifiant provenant des moyens de récupération, un bac intermédiaire 18 de stockage de lubrifiant, et une goulotte 20 apte à assurer l'évacuation du lubrifiant récupéré en direction du premier train d'engrenages 12.

L'alimentation du premier train d'engrenages 12 est assurée par un premier déflecteur 22 et l'alimentation du second train d'engrenages est assurée par un second déflecteur 24.

Conventionnellement, pour assurer la lubrification de ce type d'agencement, il est connu de disposer d'un réservoir de stockage temporaire associé à chaque train d'engrenages.

Cette configuration est particulièrement pénalisante en termes d'encombrement, notamment dans le cas d'une boîte de vitesses, car elle impose de disposer deux réservoirs temporaires de stockage du type du réservoir 14 logés dans un encombrement réduit.

Par ailleurs, cette configuration ne permet pas d'assurer systématiquement une alimentation optimale en lubrifiant des trains d'engrenages, car ceux-ci, du fait de leur engrènement, tournent à des vitesses de rotations différentes. De ce fait, ils ne sont pas nécessairement aptes à centrifuger la quantité d'huile adaptée à une bonne récupération d'huile et à une bonne alimentation du réservoir temporaire de stockage associé.

Ainsi, il est tout à fait possible que l'un des deux trains d'engrenages soit alimenté avec un débit de lubrifiant récupéré qui est excessif ou au contraire insuffisant.

L'invention remédie à cet inconvénient en proposant un agencement permettant la lubrification des deux trains d'engrenages à l'aide d'un système de lubrification différencié dépendant des vitesses de rotation des trains d'engrenages comportant un unique réservoir de stockage temporaire.

Dans ce but, l'invention propose un agencement du type décrit précédemment caractérisé en ce que le premier déflecteur 22 d'alimentation du premier train d'engrenages 12 est apte à se remplir de lubrifiant jusqu'à un niveau selon lequel il déborde vers le second déflecteur 24 d'alimentation du second train d'engrenages 13 pour assurer une lubrification différenciée desdits trains d'engrenages 12, 13.

Plus particulièrement, l'invention trouve à s'appliquer dans le cas d'un premier train d'engrenages 12 et d'un second train d'engrenages 13 qui sont alimentés coaxialement en lubrifiant par des déflecteurs agencés en bout desdits trains d'engrenages.

Ainsi, chaque déflecteur 22, 24 comporte un boîtier cylindrique fixe ouvert, qui est agencé coaxialement à l'extrémité du train d'engrenages 12, 13 associé, et qui est apte à être fermé par une face transversale du carter à laquelle il est accolé.

Ainsi, comme l'illustre la figure 1, le déflecteur 22 d'alimentation du premier train d'engrenages 12 comporte un flasque transversal 26 en forme de disque réuni à une paroi périphérique 28. La paroi périphérique 28 est fermée à son extrémité par la face transversale du carter.

La paroi périphérique 28 comporte au moins un orifice périphérique 30 supérieur qui est agencé au-dessus de l'axe A du train d'engrenages 12 associé et qui permet l'entrée du lubrifiant à l'intérieur du déflecteur 22. Cet orifice 30 est raccordé à la goulotte 20.

Par ailleurs, le flasque 26, qui est agencé en bout du train d'engrenages 12, comporte un orifice central coaxial 32 de sortie du lubrifiant qui communique avec un canal axial interne (non représenté) de lubrification du train d'engrenage 12.

De la même façon, le déflecteur 24 d'alimentation du train d'engrenage 13 comporte un flasque 34, qui est réuni à une paroi périphérique 36 qui comporte un orifice périphérique 38 d'alimentation en lubrifiant. La paroi périphérique 38 est fermée à son extrémité par la face transversale du carter.

De la même manière, le flasque 34 qui est agencé en bout du train d'engrenages 13 comporte un orifice central coaxial 40 de sortie du lubrifiant communiquant avec un canal axial interne (non représenté) de lubrification du train d'engrenages 13.

Conformément à l'invention, pour permettre le remplissage de lubrifiant du premier déflecteur 22 et son débordement vers le second déflecteur 24, la paroi périphérique 28 du premier déflecteur cylindrique 22 comporte de surcroît un orifice périphérique inférieur 42 permettant le transfert du lubrifiant vers le second déflecteur 24, via un canal 44 qui relie l'orifice périphérique intérieur 42 de transfert à l'orifice supérieur périphérique 38 du second déflecteur 24.

Par ailleurs, comme illustré à la figure 3, le premier déflecteur 22 comporte une cloison interne 46 qui s'étend entre les flasques 26 sensiblement à l'opposé de l'orifice périphérique supérieur 30 par rapport à l'axe "A" du déflecteur 22, et qui comporte d'une part une extrémité 48 joignant de manière étanche la paroi périphérique 28 entre les orifices périphériques supérieur 30 et inférieur 42, et d'autre part une extrémité libre 50 qui est agencée au-dessus de l'orifice central coaxial 32. L'orifice central d'alimentation 32 est agencé au-dessus de la cloison interne 46.

Cette cloison interne 46 est une caractéristique essentielle de l'invention car elle permet de diviser le boîtier délimité par les flasques 26 et la paroi périphérique 28 d'une part en une chambre supérieure d'alimentation 52 permettant d'alimenter le premier train d'engrenage 12 par l'intermédiaire de l'orifice central d'alimentation 32 et d'autre part en un canal inférieur d'alimentation 54 qui permet d'alimenter le second déflecteur 24 par l'intermédiaire de l'orifice périphérique inférieur 42 et du canal 44.

Ainsi, comme on peut le voir aux figures 2 et 3, au fur et à mesure que le lubrifiant "H" est acheminé du second réservoir 14 additionnel de stockage temporaire vers le premier déflecteur 22 par l'intermédiaire de la goulotte 20, la chambre d'alimentation 52 se remplit progressivement de lubrifiant sans que le canal 54 ne permette le passage du lubrifiant car son extrémité libre 50 est agencée au-dessus du canal d'alimentation 32 du premier train d'engrenage 12. De ce fait le remplissage de la chambre 52 est donc par conséquent prioritaire dans la distribution du lubrifiant.

Puis, dès lors que le débit de lubrifiant est supérieur au débit consommé par le train d'engrenages 12, le niveau de lubrifiant dans la chambre 52 monte au-dessus du niveau du canal 32 jusqu'à atteindre l'extrémité 50 de la cloison 46 de sorte que le lubrifiant "H" déborde dans le canal 54 et est acheminé vers l'orifice intérieur 42, puis vers le canal 44 jusqu'à l'intérieur du déflecteur 24 qui commence alors à se remplir en lubrifiant comme représenté à la figure 3.

L'alimentation du second train d'engrenage 13 devient alors effective dès lors que le niveau de lubrifiant "H" dans le second flasque 24 atteint le niveau du canal central 40.

Pour optimiser la capacité de la chambre 52, la cloison 46 comporte une partie principale 56, qui est conformée par exemple, mais de manière non limitative de l'invention, suivant un arc de cercle coaxial au premier déflecteur et qui comporte l'extrémité libre 50, et une partie de jonction 58, qui comporte l'extrémité 48 et qui prolonge la partie principale 56 en arc de cercle jusqu'à la paroi périphérique 28 entre les orifices périphériques supérieur 30 et inférieur 42.

Cette configuration n'est néanmoins pas limitative de l'invention, et la partie principale 56 pourrait prendre une forme autre que celle d'un arc de cercle.

D'une manière générale, tout moyen permettant l'alimentation du réservoir additionnel supérieur de stockage temporaire en lubrifiant "H" peut convenir à la bonne mise en oeuvre de l'invention.

Il pourrait notamment s'agir de moyens de pompage électriques ou mécaniques.

Toutefois, dans le mode de réalisation préféré de l'invention, les moyens de récupération de lubrifiant comportent des moyens de récupération de l'huile centrifugée par l'un et/ou l'autre des trains d'engrenages 12, 13.

De ce fait, les moyens de récupération d'huile alimentent le second réservoir additionnel supérieur 14 de stockage temporaire selon un débit qui est proportionnel à la vitesse de rotation des premier et /ou second trains d'engrenage 12, 13.

Il sera compris que le débit de lubrifiant 'H" fourni par les moyens de récupération et le second réservoir 14 de stockage temporaire est prévu pour être supérieur au débit absorbé par l'orifice central 32 du premier déflecteur 22 dès lors que l'un et/ou l'autre des trains d'engrenages 12, 13 dépasse une vitesse de rotation déterminée, pour associer le débordement de la chambre 52 d'alimentation du premier train d'engrenages vers le canal d'alimentation 44 du second déflecteur 24 à une vitesse de rotation déterminée d'au moins un train d'engrenages 12, 13.

On réalise ainsi une lubrification différenciée des trains d'engrenages 12, 13 en fonction de leur vitesse de rotation, le premier train d'engrenages 12 étant seul alimenté en dessous d'un certain seuil de vitesse de rotation, puis le second train d'engrenages 13 étant lui aussi alimenté au-dessus dudit seuil.

L'invention permet donc d'assurer de manière simple et efficace la lubrification de deux trains d'engrenages 12, 13 parallèles et superposés à l'aide d'un seul réservoir 14 additionnel supérieur de stockage temporaire et en fonction de leurs vitesses de rotation.

## Revendications

1. Agencement pour la lubrification de deux trains (12, 13) d'engrenages voisins d'axes (A, B) horizontaux qui sont montés à rotation dans un carter étanche dont le fond constitue un premier réservoir dit principal contenant un lubrifiant (H), un premier train d'engrenages (12) étant agencé sensiblement au-dessus d'un second train d'engrenages (13) et des moyens de récupération de lubrifiant étant aptes à diriger du lubrifiant en direction d'un second réservoir additionnel supérieur (14) de stockage temporaire dont le lubrifiant (H) est évacué progressivement vers le premier train d'engrenages,
**caractérisé en ce qu'**il comporte un premier déflecteur (22) d'alimentation du premier train d'engrenages (12), qui est alimenté par le second réservoir (14) additionnel supérieur de stockage temporaire, qui est apte à assurer la lubrification du premier train d'engrenages (12), et qui est apte à se remplir de lubrifiant (H) jusqu'à un niveau selon lequel il déborde vers un second déflecteur (24) d'alimentation du second train d'engrenages (13) apte à assurer la lubrification du second train d'engrenages (13), pour assurer une lubrification différenciée des trains d'engrenages (12, 13),
et **en ce que** chaque déflecteur (22, 24) comporte un boîtier cylindrique fixe ouvert, qui est apte à être fermé par une face transversale du carter, qui est agencé coaxialement à l'extrémité du train d'engrenages (12, 13) associé, et qui comporte un flasque (26, 34) en forme de disque solidaire d'une paroi périphérique (28, 36), la paroi périphérique (28, 36) comportant au moins un orifice périphérique supérieur (30, 38) qui est agencé au-dessus de l'axe (A, B) du train (12, 13) associé et qui permet l'entrée de lubrifiant (H) et un flasque (26, 34) comportant une orifice central (32, 40) coaxial de sortie de lubrifiant (H) communiquant avec un canal axial interne de lubrification du train d'engrenages (12, 13) associé.

2. Agencement selon la revendication 1, **caractérisé en ce que** la paroi périphérique (28) du premier déflecteur cylindrique comporte de surcroît un orifice périphérique inférieur (42) de transfert de lubrifiant (H) vers le second déflecteur (24), et **en ce qu'**une cloison interne (46), qui s'étend entre le flasque (26) et la face transversale du carter sensiblement à l'opposé de l'orifice périphérique supérieur (30) par rapport à l'axe (A) du déflecteur (22), qui comporte une extrémité (48) joignant de manière étanche la paroi périphérique (28) entre les orifices périphériques supérieur (30) et inférieur (42), et une extrémité libre (50) agencée au-dessus de l'orifice central coaxial (32), est agencée dans le boîtier pour le diviser sensiblement en une chambre d'alimentation (52) du premier train d'engrenages (12) et un canal d'alimentation (54) du second déflecteur (24).

3. Agencement selon la revendication précédente, **caractérisé en ce que** la cloison (46) comporte une partie principale (56), qui comporte l'extrémité libre (50), et une partie de jonction (58) qui prolonge la partie principale (56) jusqu'à la paroi périphérique (28) entre les orifices périphériques supérieur (30) et inférieur (42).

4. Agencement selon la revendication précédente, **caractérisé en ce que** l'orifice périphérique inférieur de transfert (42) communique par l'intermédiaire d'un conduit (44) avec l'orifice périphérique supérieur d'entrée (38) de lubrifiant du second déflecteur (24).

5. Agencement selon l'une des revendications précédentes, **caractérisé en ce que** l'orifice périphérique supérieur d'entrée (30) de lubrifiant est alimenté en lubrifiant (H) à partir du second réservoir additionnel supérieur (14) de stockage temporaire par l'intermédiaire d'une goulotte (20).

6. Agencement selon l'une quelconque des revendications précédentes, **caractérisé en ce que** les moyens de récupération d'huile alimentent le second réservoir additionnel supérieur (14) de stockage temporaire selon un débit proportionnel à la vitesse de rotation des premier et/ou second trains d'engrenages (12, 13).

7. Agencement selon l'une quelconque des revendications 2 à 5 prises en combinaison avec la revendication 6, **caractérisé en ce que** le débit de lubrifiant (H) fourni par les moyens de récupération est prévu pour être supérieur au débit absorbé par l'orifice central (32) du premier déflecteur (24) dès lors que l'un et/ou l'autre des trains d'engrenages (12, 13) dépasse une vitesse de rotation déterminée, pour associer le débordement de la chambre d'alimentation (52) du premier train d'engrenages (12) vers le canal d'alimentation (54) du second déflecteur (24) à une vitesse de rotation déterminée d'au moins un train d'engrenages (12, 13).

## Patentansprüche

1. Anordnung zur Schmierung zweier nebeneinander liegender Räderwerke (12, 13) mit Horizontalachsen (A, B), die drehbar in einem dichten Gehäuse montiert sind, dessen Boden einen ersten so genannten Hauptbehälter darstellt, der ein Schmiermittel (H) enthält, wobei ein erstes Räderwerk (12) im Wesentlichen über einem zweiten Räderwerk (13) angeordnet ist, und wobei Schmiermittelauffangmittel geeignet sind, Schmiermittel in Richtung eines zweiten oberen zusätzlichen Behälters (14) zur vorübergehenden Speicherung zu lenken, aus dem das Schmiermittel (H) nach und nach zum ersten Räderwerk abgeleitet wird,
**dadurch gekennzeichnet, dass** sie einen ersten Deflektor (22) zur Versorgung des ersten Räderwerks (12) umfasst, der von dem zweiten oberen zusätzlichen Behälter (14) zur vorübergehenden Speicherung versorgt wird, der geeignet ist, die Schmierung des ersten Räderwerks (12) zu gewährleisten, und der geeignet ist, sich mit Schmiermittel (H) bis zu einem Niveau zu füllen, auf dem er zu einem zweiten Deflektor (24) zur Versorgung des zweiten Räderwerks (13) überläuft, der geeignet ist, die Schmierung des zweiten Räderwerks (13) zu gewährleisten, um eine differenzierte Schmierung der Räderwerke (12, 13) zu gewährleisten,
und dass jeder Deflektor (22, 24) ein offenes festes zylindrisches Gehäuse umfasst, das geeignet ist, durch eine Querfläche des Rahmens geschlossen zu werden, der koaxial am Ende des zugehörigen Räderwerks (12, 13) angeordnet ist, und das einen Flansch (26, 34) in Form einer Scheibe umfasst, der mit einer Umfangswand (28, 36) verbunden ist, wobei die Umfangswand (28, 36) mindestens eine obere Umfangsöffnung (30, 38), die über der Achse (A, B) des zugehörigen Räderwerks (12, 13) angeordnet ist und den Eintritt von Schmiermittel (H) ermöglicht, und einen Flansch (26, 34) umfasst, der eine zentrale koaxiale Öffnung (32, 40) für den Austritt von Schmiermittel (H) umfasst, die mit einem inneren axialen Schmierkanal des zugehörigen Räderwerks (12, 13) in Verbindung steht.

2. Anordnung nach Anspruch 1, **dadurch gekennzeichnet, dass** die Umfangswand (28) des ersten zylindrischen Deflektors überdies eine untere Umfangsöffnung (42) für die Weiterleitung von Schmiermittel (H) zu dem zweiten Deflektor (24) umfasst, und dass eine innere Trennwand (46), die sich zwischen dem Flansch (26) und der Querfläche des Rahmens im Wesentlichen gegenüber der oberen Umfangsöffnung (30) in Bezug zur Achse (A) des Deflektors (22) erstreckt, die ein Ende (48), das sich dicht an die Umfangswand (28) zwischen den oberen (30) und unteren (42) Umfangsöffnungen anlegt, und ein freies Ende (50) umfasst, das über der koaxialen zentralen Öffnung (32) angeordnet ist, in dem Gehäuse angeordnet ist, um es im Wesentlichen in eine Versorgungskammer (52) des ersten Räderwerks (12) und einen Versorgungskanal (54) des zweiten Deflektors (24) zu teilen.

3. Anordnung nach dem vorhergehenden Anspruch, **dadurch gekennzeichnet, dass** die Trennwand (46) einen Hauptteil (56), der das freie Ende (50) umfasst, und einen Verbindungsteil (58) umfasst, der den Hauptteil (56) bis zur Umfangswand (28) zwischen den oberen (30) und unteren (42) Umfangsöffnungen verlängert.

4. Anordnung nach dem vorhergehenden Anspruch, **dadurch gekennzeichnet, dass** die untere Umfangsöffnung zur Weiterleitung (42) mit Hilfe einer Leitung (44) mit der oberen Umfangsöffnung (38) für den Eintritt von Schmiermittel des zweiten Deflektors (24) in Verbindung steht.

5. Anordnung nach einem der vorhergehenden Ansprüche, **dadurch gekennzeichnet, dass** die obere Umfangsöffnung (30) für den Eintritt von Schmiermittel vom zweiten oberen zusätzlichen Behälter (14) zur vorübergehenden Speicherung mit Hilfe einer Rinne (20) mit Schmiermittel (H) versorgt wird.

6. Anordnung nach einem der vorhergehenden Ansprüche, **dadurch gekennzeichnet, dass** die Ölauffangmittel den zweiten oberen zusätzlichen Behälter (14) zur vorübergehenden Speicherung mit einer Menge proportional zur Drehgeschwindigkeit des ersten und/oder zweiten Räderwerks (12, 13) versorgen.

7. Anordnung nach einem der Ansprüche 2 bis 5 in Kombination mit Anspruch 6, **dadurch gekennzeichnet, dass** die Schmiermittelmenge (H), die von den Auffangmitteln geliefert wird, dazu vorgesehen ist, größer als die von der zentralen Öffnung (32) des ersten Deflektors (24) absorbierte Menge zu sein, sobald das eine und/oder das andere der Räderwerke (12, 13) eine bestimmte Drehgeschwindigkeit überschreitet, um das Überlaufen der Versorgungskammer (52) des ersten Räderwerks (12) zum Versorgungskanal (54) des zweiten Deflektors (24) einer bestimmten Drehgeschwindigkeit mindestens eines Räderwerks (12, 13) zuzuordnen.

## Claims

1. Arrangement for lubricating two adjacent gear trains (12, 13) of horizontal axes (A, B) which are mounted in rotation in a fluidtight casing of which the bottom constitutes a first reservoir, referred to as main reservoir containing a lubricant (H), a first gear train (12) being arranged substantially above a second gear train (13) and lubricant-recovery means being able to direct lubricant in the direction of an upper, additional, second, temporary storage reservoir (14) from which the lubricant (H) is discharged progressively towards the first gear train **characterized in that** it comprises a first deflector (22) for supplying the first gear train (12) that is supplied by the upper, additional, second, temporary-storage reservoir (14), that is able to lubricate the first gear train (12) and that is able to be filled with lubricant (H) to a level at which it overflows towards a second deflector (24) for supplying the second gear train (13) that is able to lubricate the second gear train (13), in order to provide differentiated lubrication of the gear trains (12, 13), and **in that** each deflector (22, 24) comprises an open fixed cylindrical housing that is able to be closed by a transverse face of the casing, that is arranged co-axially to the end of the associate gear train (12, 13), and that comprises a flange (26, 34) in the form of a disc secured to a peripheral wall (28, 36), the peripheral wall (28, 36) comprising at least one upper peripheral orifice (30, 38) that is arranged above the axis (A, B) of the associated train (12, 13) and that allows the input of lubricant (H), and a flange (26, 34) comprising a coaxial central orifice (32, 40) for the output of lubricant (H) communicating with an inner axial channel for lubricating the associated gear train (12, 13).

2. Arrangement according to Claim 1, **characterized in that** the peripheral wall (28) of the first cylindrical deflector comprises, moreover, a lower peripheral orifice (42) for transferring lubricant (H) towards the second deflector (24), and that an inner partition (46), which extends between the flange (26) and the transverse face of the casing substantially on the opposite side from the upper peripheral orifice (30) with respect to the axis (A) of the deflector (22), which comprises an end (48) joining, in a fluid tight manner, the peripheral wall (28) between the upper (30) and lower (42) peripheral orifices, and a free end (50) arranged above the coaxial central orifice (32) is arranged in the housing to divide it substantially into a chamber (52) for supplying the first gear train (12) and a channel (54) for supplying the second deflector (24).

3. Arrangement according to the preceding claim, **characterized in that** the partition (46) comprises a main part (56) that comprises the free end (50) and a junction part (58) that extends in the main part (56) to the peripheral wall (28) between the upper (30) and lower (42) peripheral orifices.

4. Arrangement according to the preceding claim, **characterized in that** the lower peripheral transfer orifice (42) communicates via a duct (44) with the upper peripheral lubricant-inlet orifice (38) of the second deflector (24).

5. Arrangement according to one of the preceding claims, **characterized in that** the upper peripheral lubricant-inlet orifice (30) is supplied with lubricant (H) from the upper, additional, second, temporary-storage reservoir (14) via a trough (20).

6. Arrangement according to any one of the preceding claims, **characterized in that** the oil-recovery means supply the upper, additional, second, temporary-storage reservoir (14) with a flow proportional to the speed of rotation of the first and/or second gear trains (12, 13).

7. Arrangement according to any one of Claims 2 to 5 taken in combination with Claim 6, **characterized in that** the flow of lubricant (H) provided by the recovery means is intended to be greater than the flow absorbed by the central orifice (32) of the first deflector (24) as soon as one and/or other of the gear trains (12, 13) exceeds a specified speed of rotation, in order to associate the overflow from the chamber (52) for supplying the first gear train (12) towards the channel (54) for supplying the second deflector (24) with a specified speed of rotation of at least one gear train (12, 13)
